# EUROPEAN PATENT APPLICATION

(11) **EP 0 778 532 A2**
(43) Date of publication of application: **11.06.1997**
(21) Application number: 96308161.7
(22) Date of filing: 12.11.1996
(51) Int. Cl.: G06F 13/40, G06F 3/06

(54) **An information processing apparatus**

(30) Priority: 05.12.1995 JP 316414/95
(71) Applicant: INTERNATIONAL BUSINESS MACHINES CORPORATION, Armonk, NY 10504 (US)
(72) Inventor: Matsushima, Shinji, Kawasaki-shi, Kanagawa-ken (JP); Yamazaki, Mitsuhiro, Sagamihara-shi, Kanagawa-ken (JP)
(74) Representative: Bailey, Geoffrey Alan

(57) **Abstract**

An information processing apparatus of the type which can install hard disk drives (30) that serve as a master or a slave in response to whether a master/slave control pin (11,21) is set at a first voltage level for designating a hard disk drive (30) as a master or at a second voltage level for designating a hard disk drive (30) as a slave, comprises: (a) a first connector (10), for connecting a hard disk drive (30), that comprises more than one connector pin (11,21) including a first master/slave control pin (11), the first master/slave control pin (11) being maintained at the first voltage level; (b) a second connector (20), for connecting a hard disk drive (30), that comprises more than one connector pin (21,22) including a second master/slave control pin (21); (c) detection means (12) for detecting whether or not a hard disk drive (30) is connected to the first connector (10); and (d) master/slave designation means for maintaining the second master/slave control pin (21) at the second voltage level when a hard disk drive (30) is connected to the first connector (10), and maintaining the second master/slave control pin (21) at the first voltage level when no hard disk drive (30) is connected to the first connector (10).

## Description

The present invention relates to an information processing apparatus that can install to a plurality of peripheral devices, and in particular, to an information processing apparatus that can install a plurality of hard disk drives (e.g., hard disk drives that conform to the IDE (Integrated Device Electronics) standards) that acknowledge themselves either as a master or a slave in response to the input of a control signal.

In accordance with recent technical developments, various personal computers, such as desktops and notebooks, are being produced and sold on the market.

The essential components of the computers are a CPU (Central Processing Unit) and memory. The CPU reads, as needed, necessary data and programs from the memory and executes a desired process for them, and also writes the results to the memory. The memory is constituted by volatile semiconductor device, such as DRAM, and as it is relatively expensive, the memory capacity is substantially limited (several MB to several tens of MB). To supplement the capacity of such volatile memory, a non-volatile external memory device having a large memory capacity is provided for the computer system. A hard disk drive (hereinafter referred to as an "HDD") is one of the currently more popular external memory devices. The density and access rate of HDDs were enhanced from 1993 to 1994, and now HDDs of one GB are available at a low cost.

An HDD has, at the least, a hard disk that is a storage medium, a read/write head, a spindle motor that rotates the hard disk, and a circuit board. Mounted on the circuit board are, at the least, a read/write circuit, a head driving circuit, a motor driving circuit, an interface circuit, a controller for controlling these circuits, and a connector for connecting the HDD to the interface board of a personal computer (hereinafter referred to as a "PC"). The so-called IDE (Integrated Device Electronics) interface is a defacto standard interface for connecting an HDD to a PC. By using the IDE with only a buffer being provided in between, an HDD can be directly connected to a system bus (e.g., an ISA (Industry Standard Architecture) bus) of a PC (hereinafter an HDD that conforms to the IDE standard is also referred to simply as an "IDE_HDD").

As is well known by one having ordinary skill in the art, the IDE permits two HDDs to be connected to a single interface board. When two HDDs are connected, one of the HDDs serves as a master HDD and the other HDD serves as a slave HDD. The designation of each HDD as a master or a slave is performed by providing a control signal (hereafter referred to as a "-M/S") to each of the connected IDE_HDDs. More specifically, when a received -M/S is in the low-level state, the IDE_HDD acknowledges itself to be a master HDD. When a received -M/S is in the high level state, the IDE_HDD acknowledges itself to be a slave HDD. The IDE_HDD designated as a master HDD by the -M/S sets a predetermined flag ("DRV" which is the fourth bit of a "Drive/Head register") in its control register to "0". The IDE_HDD designated as a slave HDD sets its register "DRV" to "1". The main body of the PC can employ the register "DRV" to switch the access to either the master or the slave. The master/slave relationship results from the restrictions imposed by the computer architecture. Accordingly, when multiple HDDs are connected to the interface board of a PC, they must use a single I/O space in common, i.e., the respective HDD does not independently have their own I/O port.

It should be noted that (1) the PC main body can acknowledge the presence of the slave HDD only via the master HDD, and (2) the designation of the master and the slave is performed when the PC is powered on, and once they are set, the setting can not be changed until the PC is powered off. It is known by one having ordinary skill in the art that these are requisite points for the maintenance of compatibility with older model IDE devices.

Conventionally, a jumper plug is used to designate a master/a slave for an IDE_HDD. The connector pins of the IDE_HDD are adequately short-circuited by the jumper plug, and when the IDE_HDD is connected to the interface board of a PC, the -M/S of each HDD has a potential as designated (low level or high level). The designation method using jumper pins is disclosed in, for example, Japanese Patent Application No. Hei 05-44051 (Japanese Unexamined Patent Publication No. Hei 06-259196).

The master/slave designation method using a jumper plug is relatively easy and inexpensive. For example, a jumper plug for an HDD may be set once and the HDD can be mounted on a machine by a manufacturer before it is shipped, or a jumper plug may be set by a user after purchasing an HDD. Since the setting for the jumper pins accompanies an installation by a user, it is thought to be difficult in such an environment where an HDD is frequently installed and removed. For example, since a notebook PC is compact and has a small number of bays, peripheral devices are frequently exchanged as needed. Thus, the master/slave designation method that requires the use of a jumper plug is not regarded as preferable. The method that uses a jumper plug is accepted for PCs, such as desktop PCs, where as a standard an HDD is once mounted on and thereafter fixed in a machine.

One of the master/slave designation methods that do not employ a jumper plug is one where the IDE connectors for the PC are determined for a master or for a slave as a default. More specifically, a -M/S pin for a master IDE connector is constantly set to the low level state (grounded state), while an -M/S pin for a slave IDE connector is constantly set to the high level state. For example, in the "IBM ThinkPad 755 ("ThinkPad" is a trademark of IBM Corp.)", which is sold on the market by IBM Japan, Co., Ltd., an IDE connector mounted on the PC main body is fixed as a master. In the IBM Docking Station, which is produced by IBM Corp., wherein "ThinkPad 755" can be mounted, an IDE connector is fixed as a slave. Such designation of the master/slave is permitted with the presumption that "an HDD is always installed in the PC main body". In other words, only under the above restricted condition is the operation of the master and the slave HDDs ensured. It is to be noted that the aforementioned "docking station" is also called an "expansion box" or an "expansion unit". The main feature of the docking station is that it provides for the notebook PC the same working environment as that of a desktop PC, when a notebook computer is used in an office. The primary function is as a bus expansion function that is realised by expanding a bus in a notebook computer to provide an additional bus slot. With the bus expansion function, a second IDE HDD can be provided for the notebook computer. It should be noted that a docking station is disclosed in, for example, Japanese Patent Application No. Hei 06-134124 that was assigned to the present applicant.

A method for designating in advance the IDE connectors as a master and as a slave is excellent in that the load for the setting of a jumper plug is not placed on a user. This method is especially effective so long as the presumption is that a master HDD is always installed. However, as the detachability of a peripheral device has currently become important, it is gradually becoming apparent that specific problems have arisen.

In a situation wherein a peripheral device is replaced relatively often, there tend to be occasions when users mistakenly install HDDs by attaching them only to slave IDE connectors. Furthermore, a design wherein the IDE connector for the PC main body is set in advance as a master is not acceptable in a situation where an HDD is mounted only in a docking station and no HDD is installed in the PC main body (or another storage device is mounted). Because, as is described above, the PC can not acknowledge the presence of an HDD set as a slave without an intervening master HDD. A slave HDD that can not be acknowledged is merely an extra container.

The designating of the master/slave IDE_HDDs must be executed when the power is turned on because the communication with the PC main body (I/O access) is performed by only the master HDD; the slave HDD can not independently communicate with the PC, as previously described. This means that once the master/slave designating fails, the designating can not be corrected using software after the initialisation routine is terminated.

Further, when the master/slave is designated by using a jumper plug, specific problems occur in those situations where HDDs are frequently detached: two HDDs designated as master HDDs may be connected at the same time to individual IDE connectors during the frequent replacements, or only an HDD designated as a slave HDD may be connected to an IDE connector. In the former case, the master HDDs conflict with each other in the I/O space, and cause the security of the system to be deteriorated. In the latter case, the presence of the connected HDD is not acknowledged by the PC main body, and results in both the HDDs being regarded as only an extra container.

The present invention provides an information processing apparatus that permits the connection of a plurality of peripheral devices ( e.g. hard disk drives that conform to, for example, IDE (Integrated Device Electronics) standards) that acknowledge themselves as either masters or slaves in consonance with an input control signal.

The information processing apparatus of the present invention can automatically and accurately designate hard disk drives as masters or as slaves in response to the connection context. Such master/slave designation is automatically and exactly performed when power is on.

Further, according to the information processing apparatus of the present invention, since only one of the connected hard disk drives is designated as a master, no load is placed on a user.

The invention will now be described, by way of example, with reference to the accompanying drawings, in which:
Fig. 1 is a diagram illustrating the arrangement of a personal computer (PC) and an IDE_HDD that are employed for one embodiment of the present invention;
Fig. 2 is a diagram for explaining the operation of the embodiment, or more specifically, showing the state wherein only an HDD 30-a is connected to a first IDE connector 10;
Fig. 3 is a diagram for explaining the operation of the embodiment, or more specifically, showing the state wherein only an HDD 30-b is connected to a second IDE connector 20; and
Fig. 4 is a diagram for explaining the operation of the embodiment, or more specifically, showing the state wherein the HDDs 30-a and 30-b are respectively connected to the first and the second IDE connectors 10 and 20.

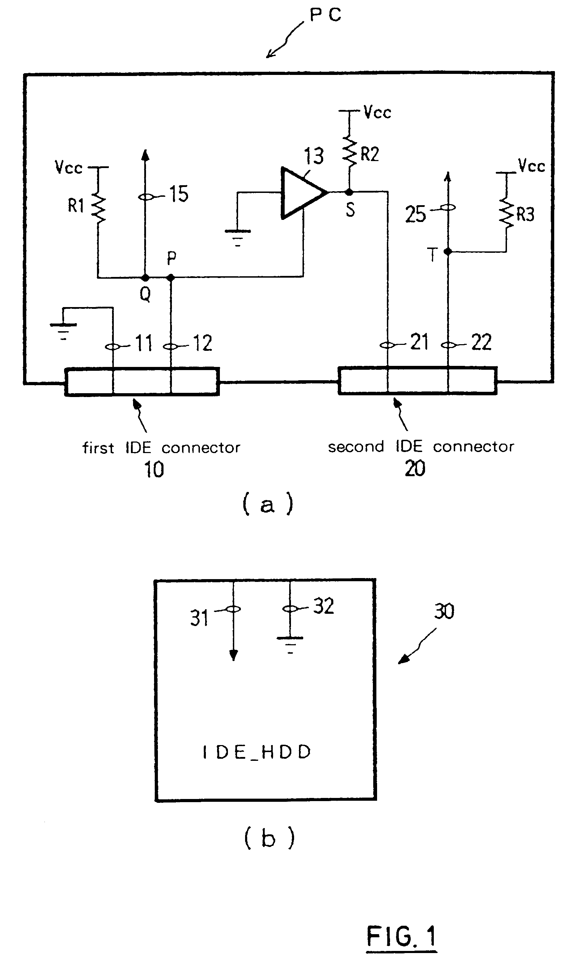

In Fig. 1(a) is shown only an IDE interface peripheral portion from among the hardware components of the PC. As is shown, the PC has a first IDE connector 10 and a second IDE connector 20 for connecting IDE_HDDs. The connectors 10 and 20 conform to the IDE standard, and comprises multiple connector pins, respectively including "-M/S" pins 11 and 21 for designating a connected HDD as a master or a slave, and "DETECT" pins 12 and 22 for determining whether or not the HDD is connected. As will be described later, the HDD can be designated as a master by receiving a -M/S signal of a low (ground) level, while the HDD can be designated as a slave by receiving a -M/S signal of a high (open) level. The HDDs connected to the connectors 10 and 20 transmit a low (ground) level DETECT signal to the PC main body to notify the PC that the HDDs are connected to the PC. Since the other pins of the IDE connectors 10 and 20 are not related to the subject of the present invention, the names of these pins and the their operation will not be explained.

The first -M/S pin 11 in the first connector 10 is grounded on the interface board side. Thus, a low-level - M/S signal is to be transmitted to an HDD 30 that is connected to the first connector 10.

The first DETECT pin 12 in the first connector 10 is branched at point P. One of the branched ends of the first DETECT pin 12 is pulled up via a protection resistor R1 by a voltage V_{cc}, and the other end is connected to a control pin of a buffer 13. The system retrieves a voltage level for the first DETECT pin 12 at point Q, and uses it as a first detection signal line 15 to confirm the presence of an HDD 30. When the HDD 30 is connected to the first connector 10, the first DETECT pin 12 is grounded via the HDD 30, which will be described later. Resultantly, the first detection signal line 15 is pulled down and the buffer 13 is floated to the tristate OFF condition. When the HDD 30 is not connected to the first connector 10, the first detection signal line 15 is pulled up by voltage V_{cc} and the buffer 13 is set to the tristate ON condition.

The input terminal of the buffer 13 is grounded and its output terminal is pulled up via a protection resistor R2 by voltage V_{cc}. The pulled up output terminal is branched at point S and one end of the branched line is connected to the second -M/S pin 21 in the second connector 20. When the HDD 30 is connected to the first connector 10, in response to the tristate OFF condition of the buffer 13, so that the second -M/S pin 21 is pulled up by voltage V_{cc}. When the HDD 30 is not connected to the first connector 10, in response to the tristate ON condition of the buffer 13, the second - M/S pin 21 is grounded.

The second DETECT pin 22 of the second connector 20 is pulled up via a protection resistor R3 by voltage V_{cc}. The system retrieves a voltage level for the second DETECT pin 22 at point T and uses it as a second detection signal line 25 to confirm the presence of the HDD 30. When the HDD 30 is connected to the second connector 20, the second DETECT pin 22 is grounded via the HDD 30, which will be described later, and the second detection signal line 25 is pulled down. When the HDD 30 is not connected to the second connector 20, the second detection signal line 25 is pulled up by voltage V_{cc}.

Although the PC that is used for this embodiment has many other hardware components, such as a CPU, memory, and a system bus, since they are well known to one having ordinary skill in the art and are not directly related to the subject of the present invention, no explanation for them will be given.

In this context, IDE_HDD 30 has, at the least, a hard disk that is a storage medium, a read/write head, a spindle motor that rotates the hard disk, and a circuit board. Mounted on the circuit board are, at the least, a read/write circuit, a head driving circuit, a motor driving circuit, an interface circuit, and a control circuit that controls these circuits. As these are well known to one having ordinary skill in the art and are not directly related to the subject of the present invention, they are not shown in Fig. 1(b).

The HDD 30 conforms to the IDE standards, and includes -M/S pin 31, a DETECT pin 32, and other connector pins for connecting to the connectors 10 and 20. The HDD 30 serves as a master or as a slave in response to the voltage level of the -M/S pin 31 when power is on. When the -M/S pin 31 is low, the HDD 30 serves as a master, and when the -M/S pin 31 is high, the HDD 30 serves as a slave. The DETECT pin 32 is grounded inside the HDD 30. When the HDD 30 is connected to the connector 10 or 20, a low level is provided for the DETECT pin 12 or 22 on the system side.

The operation of the pins 31 and 32 is a well known matter that is specified by the IDE standards. The HDD 30 conforms to the IDE and does not require a special change or a correction in its design to embody the present invention. The other connector pins of the HDD 30 are not directly related to the subject of the present invention and will not be explained.

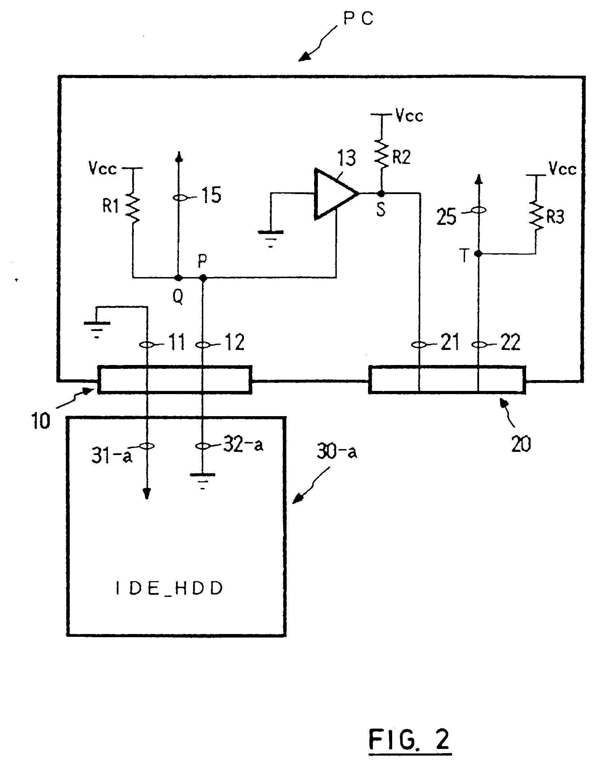

The operational characteristics when IDE_HDDs 30-a and/or 30-b are connected to the IDE connectors 10 and 20 of the PC will now be described while referring to Figs. 2 through 4.

When only the first connector is used:

In Fig. 2 is shown the state when only the HDD 30-a is connected to the first IDE connector 10.

The -M/S pin 31-a of the HDD 30-a is grounded via the first -M/S pin 11. The HDD 30-a can therefore acknowledge itself as a master when the power is on. In other words, it is ensured that only the connected HDD 30-a will be designated as a master.

The first DETECT pin 12 is grounded via a DETECT pin 32-a. The first detection signal line 15 is set low and the system can detect the presence of the HDD 30-a.

The second DETECT pin 22 is opened. Resultantly, the second detection signal line 25 is pulled up by voltage V_{cc} and goes high, so that the system can detect the absence of the HDD 30-b (not shown).

When only the second connector is used:

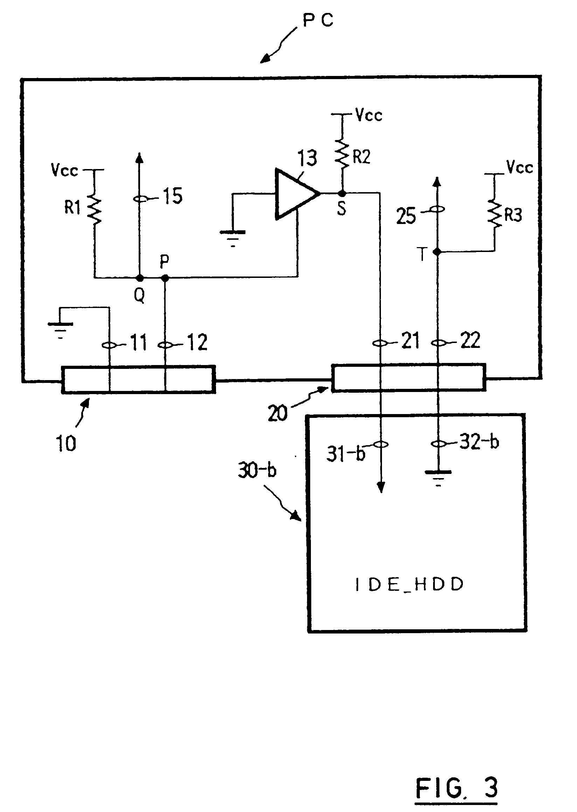

In Fig. 3 is shown the state when only the HDD 30-b is connected to the second IDE connector 20.

As is shown in Fig. 3, the first DETECT pin 12 is opened. Resultantly, the first detection signal line 15 is pulled up by voltage V_{cc} and goes high, so that the system can detect the absence of the HDD 30-a (not shown).

The buffer 13 is set to the tristate ON condition in response to the open state of the first DETECT pin 12. As a result, the second -M/S pin 21 is grounded and the DETECT pin 31-b of the HDD 30-b can go low. Thus, the HDD 30-b can acknowledge itself as a master when the power is on. In other words, it is ensured that only the connected HDD 30-b will be designated as a master.

The second DETECT pin 12 is grounded via the DETECT pin 32-b. The second detection signal line 25 goes low so that the system can detect the presence of the HDD 30-b.

When both the first and the second connectors are used:

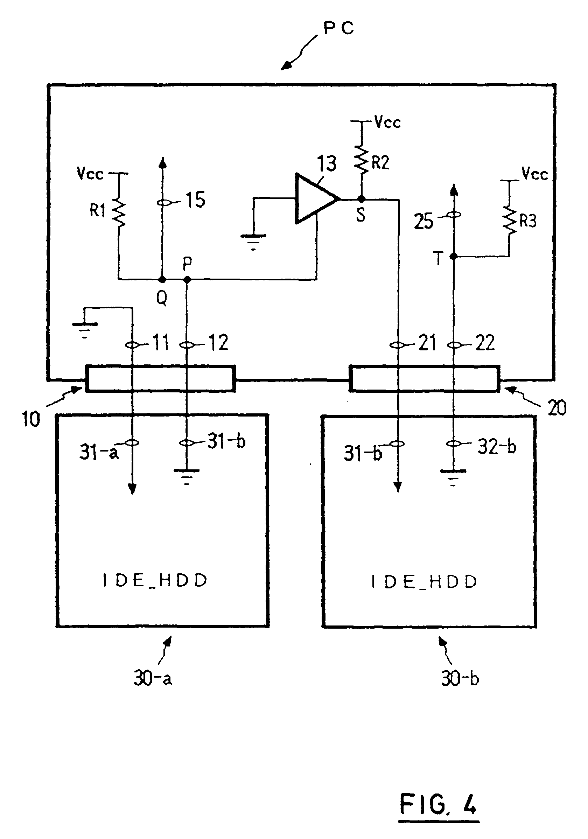

In Fig. 4 is shown the state when both the HDDs 30-a and 30-b are connected to the first and the second IDE connectors 10 and 20 respectively.

As is shown in Fig 4, the -M/S pin 31-a of the HDD 30-a is grounded via the first -M/S pin 11. Resultantly, the HDD 30-a can acknowledge itself as a master when the power is on.

The first DETECT pin 12 is grounded via the DETECT pin 32-a. Resultantly, the first detection signal line 15 goes low so that the system can detect the presence of the HDD 30-a.

As the first DETECT pin 12 is grounded, the buffer 13 is floated to the tristate OFF condition. As a result, the second -M/S pin 21 continues to be pulled up by voltage V_{cc}, and a high level signal is provided to the -M/S pin 31-b of the HDD 30-b. Thus, the HDD 30-b can acknowledge itself as a slave when the power is turned on. In other words, only the HDD 30-a, to which priority is given, is regarded as a master.

The second DETECT pin 12 is grounded via the DETECT pin 32-b. Resultantly, the second detection signal line 25 goes low so that the system can detect the presence of the HDD 30-b.

It can be fully understood by referring to the above explanation that the information processing apparatus of the present invention can appropriately avoid the conditions that are not permitted by the system: (1) the only HDD connected is designated as a slave, (2) both of the HDDs connected are designated as masters, and (3) both of the HDDs connected are designated as slaves.

The present invention has been described in detail while referring to a specific embodiment. However, it should be obvious to one having ordinary skill in the art that various modifications or revisions of the embodiment are possible within the scope of the present invention. For example, an IDE device is not specified to an HDD and another peripheral device that has an IDE interface may be employed. The interface standards are not limited to the IDE standards, and other standards may be employed by which a plurality of peripheral devices of the type which can be connected to serve either as masters or as slaves.

As is described above in detail, according to the present invention, provided is an excellent information processing apparatus by which can be connected a plurality of hard disk drives (hard disk drives that conform to, for example, IDE (Integrated Device Electronics) standards) that acknowledge themselves as being either a master or a slave in response to an input control signal, and that can designate hard disk drive as either a master or a slave without placing a load on a user.

## Claims

1. An information processing apparatus comprising:
first and second connectors (10,20) for connecting a peripheral device (30) that is driven either as a master or as a slave; and master/slave designation means for providing: (a) a control signal that designates as a master the peripheral device (30) connected to said first connector (10) when only said first connector (10) connects the peripheral device (30); (b) a control signal that designates as a master the peripheral device (30) connected to said second connector (20) when only said second connector (20) connects the peripheral device (30); or (c) a control signal that designates as a master the peripheral device (30) connected to said first connector (10) when peripheral devices (30) are connected to both of said connectors (10,20).

2. An apparatus according to claim 1, wherein said first connector (10) comprises a plurality of connector pins (11,12) including a first master/slave control pin (11), said first master/slave control pin (11) being maintained at a first voltage level for designating the peripheral device (30) as a master; and said second connector (20) comprises a plurality of connector pins (21,22) including a second master/slave control pin (21), the voltage level on said second master/slave pin (21) being varied in response to whether or not a peripheral device (30) is connected to said first connector (10).

3. An apparatus according to claim 2, wherein said second master/slave control pin (21) is maintained at a first voltage level when no peripheral device is connected to said first connector (10), and at a second voltage level for designating the peripheral device (30) as a slave when a peripheral device (30) is connected to said first connector (10).

4. An apparatus according to any one of the preceding claims, wherein said peripheral device (30) is a hard disk drive.

5. An apparatus according to claim 4, wherein the standards for connection of said hard disk drive (30) conform to IDE (Integrated Device Electronics) standards.

6. An apparatus according to claim 4 or 5 further comprising detection means (12) for detecting whether or not a hard disk drive (30) is connected to said first connector (10).
